# EUROPÄISCHE PATENTSCHRIFT

(11) **EP 0 872 603 B1**
(45) Veröffentlichungstag und Bekanntmachung des Hinweises auf die Patenterteilung: **26.03.2003**
(21) Anmeldenummer: 98106821.6
(22) Anmeldetag: 15.04.1998
(51) Int. Cl.: E03F 1/00, E03D 5/00

(54) **Kombiniertes Vakuum-Toilettensystem**
Vacuum toilet system
Système à vide pour une toilette

(30) Priorität: 17.04.1997 US 838238
(43) Veröffentlichungstag der Anmeldung: 21.10.1998
(73) Patentinhaber: Dometic GmbH, 57074 Siegen (DE)
(72) Erfinder: Lorek, Manfred, 57074 Siegen (DE)
(74) Vertreter: Herrmann-Trentepohl, Werner, Dipl.-Ing.

(56) Entgegenhaltungen:
- EP-A- 0 643 176
- US-A- 2 753 195
- US-A- 4 917 149
- US-A- 5 402 826

## Beschreibung

Die Erfindung betrifft ein kombiniertes Vakuum-Toilettensystem für eine stationäre oder eine mobile Einrichtung, insbesondere Wochenendhäuser, Baucontainer oder Wohnmobile, Caravans, Boote und/oder dgl. umfassend einen Tank, eine Vakuumtoilette, die eine Vakuumpumpe aufweist, eine Rohrleitung zum Verbinden des Tanks mit der Vakuumpumpe und eine Vorrichtung zum selbsttätigen flüssigkeits- und/oder gasdichten An- bzw. Abkoppeln des Tanks an eine Leitung des Toilettensystems.

In fliegenden Bauten, Wohnmobilen, Caravans und/oder Booten ist es schon seit langem erwünscht, daß die Fäkalien des Toilettensystems in einem Tank aufgefangen werden, der an entsprechenden Stationen ausgepumpt wird oder aus der Wohneinheit oder dem Fahrzeug entnommen und an einer Entsorgungsstation entleert wird, um nach der Entleerung wieder in das Fahrzeug o. dgl. eingesetzt zu werden. Jedesmal, wenn bei einem solchen System eine Verbindung zwischen einer Rohrleitung und einem Tank hergestellt werden soll, ist es insbesondere dann in höchstem Maße erwünscht, eine undichte Stelle oder das Heraustropfen von Flüssigkeit zu vermeiden, wenn es sich um die Umgebung belastende Flüssigkeiten und/oder Gase handelt. Eine flüssigkeits- und/oder gasdichte An- bzw. Abkopplung des Tanks an das System ist auch dann besonders erwünscht, wenn der Tank als Vakuumtank in einem Vakuum-Toilettensystem arbeitet, da das Vakuum in dem Tank während des Anschlusses aufrechterhalten werden muß. Eine Leckage würde dazu führen, daß die Vakuumpumpe permanent in Betrieb wäre, so daß die Energieresourcen des Caravans oder Boots o. dgl. schnell erschöpft wären. Andererseits würde eine permanent laufende Vakuumpumpe zu einem hohen Energieverbrauch auch bei Netzbetrieb führen und darüber hinaus zu einer Belästigung in Folge Geräuschentwicklung.

Wenn ein Vakuum-Toilettensystem Verwendung findet, ist es erwünscht, daß die Pumpe nur intermittierend zum Aufbau des Vakuums tätig wird und das Vakuum im System einschließlich des mobilen an- bzw. abkoppelbaren Tanks erhalten bleibt. Bei der An- und Abkopplung muß dafür gesorgt werden, daß weder Gasleckagen noch Flüssigkeitsleckagen auftreten, da letztere die Einrichtung verschmutzen und darüber hinaus unangenehmen Geruch entfalten.

Die EP 0 643 176 A2 offenbart ein kombiniertes Vakuum- Toilettensystem für eine stationäre oder mobile Einrichtung, umfassend einen Tank mit einem Einlass, eine Vakuumpumpe und eine Rohrleitung zum Verbinden des Tanks mit der Vakuumpumpe. Der Tank ist integrierter Gesamtteil des Systems und kann unter anderem durch Abpumpen entleert werden. Nachteilig an der Konstruktion ist, dass ein hygienisches und leicht zu bewerkstelligendes An- und Abkoppeln des Tanks von der Vakuumtoilette nicht möglich ist. Spezielle Mittel zur An- und Abkoppelung des Tanks vom Gesamtsystem sind nicht gezeigt.

Der vorliegenden Erfindung liegt die Aufgabe zugrunde, eine Vorrichtung zum einfachen flüssigkeits- und/oder gasdichten An- bzw. Abkoppeln eines Behälters an eine Leitung, insbesondere eines mobilen Tanks an eine Verbindungsleitung eines Toilettensystems zu schaffen, wobei die Verbindung beim Einsetzen des Tanks möglichst selbsttätig hervorgerufen wird. Der Erfindung liegt ferner die Aufgabe zugrunde, ein Vakuum-Toilettensystem für eine stationäre Einrichtung bzw. ein mobiles Fahrzeug, insbesondere Wochenendhäuser, bzw. Wohnmobile, Caravans, Boote oder dgl. zu schaffen, bei welchem durch eine geeignete Verbindungsvorrichtung zwischen dem Tank und der Vakuumtoilette gewährleistet wird, daß das Vakuum in dem Toilettensystem bzw. dem Tank möglichst lange aufrechterhalten wird, solange die Toilette nicht in Gebrauch ist, so daß die Verbindung in hohem Maße gas- und/oder flüssigkeitsdicht sein muß und darüber hinaus ein leichtes An- bzw. Abkoppeln an das Vakuum-Toilettensystem gewährleistet wird.

Diese Aufgabe wird mit einer Vorrichtung mit den Merkmalen des Anspruchs 1 bzw. des Anspruchs 36 gelöst. Vorteilhafte Ausführungen ergeben sich aus den Unteransprüchen 2 bis 35.

Gemäß der Erfindung wird ein kombiniertes Vakuum- Toilettensystem für eine stationäre oder mobile Einrichtung, insbesondere Wochenendhäuser, Baucontainer, Wohnmobile, Caravans, Boote o. dgl. Bereitgestellt, umfassend einen Tank, eine Vakuumtoilette, die eine Vakuumpumpe aufweist, eine Rohrleitung zum Verbinden des Tanks mit der Vakuumpumpe, und eine Vorrichtung zum selbsttätigen flüssigkeits- und/oder gasdichten An- bzw. Abkoppeln des Tanks an eine Leitung des Toilettensystems. Für ein anzukoppelndes Ende der Leitung und für den anzukoppelnden Tank ist je ein Rohrstutzen der Vorrichtung zum selbsttätigen flüssigkeits- und/oder gasdichten An- bzw. Abkoppeln vorgesehen, von denen einer an seinem stirnseitigen Ende verschlossen ist, während der andere an seinem stirnseitigen Ende durch ein Verschlussteil verschließbar ist. Die Rohrstutzen sind in eine abgedichtete Position zueinander bewegbar, und jeder Rohrstutzen weist in der Kopplungsstellung in Deckung zueinander bringbare Öffnungen auf. Der leitungsseitige Rohrstutzen besitzt eine sich über den größten Teil seiner Länge erstreckende Trennwand, welche den Rohrstutzen in zwei gegeneinander verschlossene Kammern unterteilt, wobei die eine Kammer über die Leitung mit der Toilette und die andere Kammer mit der Vakuumpumpe derart verbunden ist, dass eine Verbindung zwischen der Leitung und dem Tank einerseits und eine Verbindung zwischen dem Tank und der Vakuumpumpe andererseits herstellbar ist, und jede Öffnung in der entkoppelten Position durch ein sich beim Entkoppeln in eine Verschlußstellung bewegbares Verschlussteil verschlossen ist. Vorteilhafterweise sorgen zwischengelagerte Dichtungsmittel fiir eine Abdichtung, wenn die Rohrstutzen ineinander geschoben werden. Jeder Rohrstutzen weist mindestens eine in der Kopplungsstellung in Deckung miteinander bringbare Öffnung auf, durch welche eine Verbindung von der Toilette zu dem Tank herstellbar ist. Wird jedoch die Verbindung zwischen dem Toilettensystem und dem Tank getrennt, ist vorgesehen, daß sich auf bzw. in einem jeweiligen Rohrstutzen Verschlußteile während der Entkopplungsbewegung in eine Schließstellung bewegen, in welcher die jeweilige Öffnung verschlossen wird.

Werden die Rohrstutzen ineinandergeschoben, so kann der Stutzen mit dem größeren Auβendurchmesser das Verschlußstück, welches auf dem Stutzen mit dem kleinereh Außendurchmesser gleitend verschiebbar ist, aus der Verschlußstellung in die Öffnungsstellung verschieben, während der Stutzen mit dem kleineren Durchmesser das Verschlußstück, welches in dem Stutzen mit dem größeren Durchmesser gleitend gelagert ist, von der Verschlußstellung seinerseits in die Öffnungsstellung verschiebt. Dabei sind die Rohrstutzen derart dimensioniert und zueinander angeordnet, daß sich die zueinander fluchtenden Öffnungen, die sich vorteilhaft in der Mantelfläche der Rohrstutzen befinden, in der Kopplungsposition innerhalb des Tankraums fluchten. Um dieses Fluchten zu gewährleisten, ist ferner in vorteilhafter Weise vorgesehen, daß das Kopplungsende der Leitung und der Tank in der Kopplungsposition ortsfest positioniert sind. Die Verschlußteile können von an die Form der Rohrstutzen angepaßten, vorzugsweise zylinderartigen Schiebern mit stirnseitigen Flanschen gebildet sein, welche als Anlagefläche dienen. Diese Schieber geben die Öffnungen in der Kopplungsposition frei, bzw. schließen sie in der entkoppelten Position. Dabei sind die Schieber in vorteilhafter Weise in Schließrichtung durch Federn, vorzugsweise Schraubenfedern vorgespannt, so daß gewährleistet ist, daß sich die Schieber stets beim Entkoppeln des Tanks automatisch in die Verschlußposition bewegen, in welcher sie die jeweilige Öffnung verschließen. Die Dichtungsmittel sind dabei vorteilhaft von O-Ringdichtungen gebildet, welche sich in der Verschlußposition jeweils vor und hinter der Öffnung befinden. Zusätzlich können an den Gleitflächen der Schieber weitere Dichtmittel vorgesehen sein. Damit sich die Schieber beim Verschieben nicht verdrehen und damit sie in ihrer Längsbewegung begrenzt werden, sind in vorteilhafter Weise Nut- und Federeinrichtungen vorgesehen, in welchen die Schieber geführt werden. Diese Nut- und Federeinrichtungen verhindern auch ein Verdrehen der Schieber um ihre Längsachse.

Damit der Rohrstutzen des Kopplungsendes der Verbindungsleitung zum Toilettensystem gegenüber dem herausnehmbaren Tank eine feste Position und Ausrichtung einnimmt, ist vorteilhaft vorgesehen, daß dieser Rohrstutzen an einer Wand einer Plattform befestigt ist und sich im wesentlichen zu beiden Seiten der Plattform erstreckt. Dagegen ist der tankseitige Rohrstutzen an einer Tankwand angeflanscht und erstreckt sich im wesentlichen in den Tank hinein. Werden nun die Rohrstutzen ineinandergeschoben, dann erfolgt dies derart, daß der plattformseitige Rohrstutzen in den Tankrohrstutzen eingeschoben wird, wobei er den in dem tankseitigen Rohrstutzen gelagerten Schieber mit seinem stimseitigen geschlossenen Ende in die Öffnungsstellung drückt und zwar so weit, bis seine Öffnung mit der Öffnung des tankseitigen Stutzens in Deckung gebracht ist. Bei dem tankseitigen Schieber handelt es sich um einen kolbenartigen Hohlkörper, der gegen die Wirkung einer Federwirkung in die Öffnungsstellung geschoben wird, wobei sich die Feder an einem stirnseitigen Verschluß des tankseitigen Rohrstutzens abstützt. Da es beim Einschieben des Schiebers in den stirnseitig verschlossenen Tankrohrstutzen zu einer Komprimierung der darin enthaltenen Luft kommen könnte, besitzt der Kolben eine Entlüftungsbohrung, so daß die darin enthaltene Luft über eine weitere Öffnung im Rohrstutzen in den Tankraum entweichen kann.

In jedem Rohrstutzen sind zwei Öffnungen vorgesehen, die diametral zueinander angeordnet sein können, wobei eine kleinere Öffnung an der Oberseite und eine größere Öffnung an der Unterseite des jeweiligen Stutzens vorgesehen sein kann. Die etwas kleinere obere Kammer ist einerseits mit der Vakuumpumpe verbunden und andererseits in der Ankopplungsposition über die obere kleinere Öffnung mit dem Tankinnenraum, während die etwas größere Kammer mit der Toilette verbunden ist und ferner in der Ankopplungsposition über die nach unten weisenden, etwas größeren Öffnungen mit dem Tankinnenraum. Auf diese Weise wird gewährleistet, daß über die Vakuumpumpe keine Fäkalien angesaugt werden können, sondern in dem Tank lediglich das Vakuum hergestellt wird, damit die Fäkalien aus dem Toilettenbereich in den Tank gesaugt werden können.

Es kann aber auch vorgesehen sein, daß die Vakuumsaugleitung von der Fäkalienleitung getrennt angeordnet ist, wobei die Vakuumleitung über ein ineinander schiebbares, in der Kopplungsstellung gas- und flüssigkeitsdicht abgedichtetes Rohrstutzensystem unmittelbar an einen oberen Bereich des Tanks angeschlossen sein kann, so daß sie eine erhöhte Position im Tank einnimmt, um ein Ansaugen von Fäkalien auszuschließen. In einem solchen Fall muß allerdings gewährleistet sein, daß entsprechende Ankopplungs- bzw. Abkopplungssysteme sowohl für die Vakuumleitung als auch für die Fäkalienleitung vorgesehen sind, ähnlich wie sie weiter oben beschrieben wurden.

Die Vakuumpumpe ist an der Wand der Plattform befestigt und wird in vorteilhafter Weise von einem Antriebsmotor, insbesondere einem Elektromotor angetrieben.

Um feststellen zu können, ob ein Tank angeschlossen ist oder nicht, ist in der Wand der Plattform in vorteilhafter Weise ein Sensor zur Tankerkennung vorgesehen. Ein weiterer Sensor erfaßt den Füllungsstand des Tanks und zeigt diesen in Abhängigkeit von einem bestimmten erreichten Niveau an. Dieser Sensor ist vorzugsweise in der Wand der Plattform im Bereich unterhalb der Öffnungen für den Eintritt der Fäkalien in den Tank angeordnet. Schließlich ist ein Sensor zum Erfassen des in dem Tank herrschenden Unterdrucks vorgesehen. Alle Sensoren stehen mit Schaltern in Wirkverbindung, welche den Energiefluß zum Antriebsmotor der Vakuumpumpe unterbrechen bzw. freigeben, wenn vorbestimmte Sollwerte oder Zustände über- bzw. unterschritten werden bzw. erfaßt werden. Ist z.B. kein Tank eingesetzt, wird die Stromzufuhr zum Antriebsmotor unterbrochen. Ist der Füllungsstand erreicht, wird die Stromzufuhr unterbrochen. Bzw. ist das vorgebene Vakuum erreicht, wir die Vakuumpe abgestellt usw.

Um eine sichere Position des Tanks zu gewährleisten, ist in vorteilhafter Weise vorgesehen, daß die Plattform einen am Boden eines Raumes, insbesondere am Boden des Caravans befestigbaren verbreiterten Fußteil aufweist, in welchen ein zur Führung und Aufnahme des Tank dienendes Bodenteil mit Hilfe von Zentrierhaken einsetzbar ist. Das Bodenteil besitzt einen gehäuseartigen Rahmen, der insbesondere an seiner Oberseite mit Führungseinrichtungen ausgestattet ist, die mit korrespondierenden Einrichtungen im Tankboden in Eingriff bringbar sind, um den Tank in der Ankopplungsposition zu halten und selbst bei Fahrzeugbewegungen zu gewährleisten, daß sich der Tank nicht verschieben kann. An dem Tank und/oder dem Bodenteil können Rastmittel vorgesehen sein, mit welchen der Tank in der Ankopplungsposition arretierbar ist. Diese Rastmittel können derart gestaltet sein, daß sie zur Entnahme des Tanks leicht gelöst werden können.

Das rahmenartige Bodenteil besitzt fernen eine Aufnahme für eine austauschbare Filtereinrichtung, welche in vorteilhafter Weise mit ihrem Einlaß an die Abluftseite der Vakuumpumpe und mit ihrem Auslaß an eine in die freie Atmosphäre mündende Schlauchverbindung angeschlossen ist. Dabei kann die Filtereinrichtung in der eingesetzten Position federbelastet sein und einen Aktivkohlefilter enthalten, der auf diese Weise leicht gegen eine neue Filterkassette austauschbar ist.

Da der Tank vorwiegend in mobilen Fahrzeugen eingesetzt wird und zur zeitweiligen Aufnahme der Fäkalien dient, die dann bei vollem Tank an einer entsprechenden Entsorgungsstation entsorgt werden, ist es zweckmäßig, daß der Tank handhabbar gestaltet ist. So weist er z. B. entsprechende Tragegriffe auf und kann auch Rollunterstützungselemente besitzen, die ein Herausziehen aus der Führungseinrichtung des Bodenteils erleichtern. Schließlich ist in vorteilhafter Weise vorgesehen, daß der Tank von der Außenseite des Caravans durch eine verschließbare Öffnung zugänglich ist. Das kombinierte Vakuum-Toilettensystem besitzt neben den oben beschriebenen Vorteilen der leichten Handhabbarkeit, der Hygiene und geringen Geruchsbelästigung den weiteren Vorteil, daß auf den Zusatz von Chemikalien im wesentlichen verzichtet werden kann, da das Vakuum-System eine Geruchsbelästigung unterbindet. Dies trägt in erheblichen Maße zur Entlastung der Umwelt bei. Auch die über die Vakuumpumpe in die Umgebung abgegebenen Abgase sind durch den Aktivkohlefilter gereinigt und führen nicht zu einer Belastung der Umwelt. Schließlich besitzt das kombinierte System gegenüber Wasserspülungstoiletten den wesentlichen Vorteil der erheblichen Wassereinsparung. Das Wasser wird nämlich nicht zum Abtransport der Fäkalien aus der Toilettenschüssel benötigt, sondern i.w. nur zur Nachreinigung derselben. Da der Unterdruck erheblich ist, werden ferner auch Verstopfungen des Leitungssystems nahezu gänzlich verhindert.

Weitere Einzelheiten, Vorteile und Merkmale der Erfindung ergeben sich aus der nachfolgenden Beschreibung von bevorzugten Ausführungsbeispielen anhand der Zeichnung. Darin zeigen:
- Fig. 1: eine schematische Längsschnittansicht durch das plattformseitige Ankopplungssystem;
- Fig. 2: eine Stirnseitenansicht in Richtung des Pfeils A;
- Fig. 3: den tankseitigen Rohrstutzen mit dem darin gelagerten Schieber;
- Fig. 4: eine schematische Darstellung der Ankopplungssituation des tankseitigen Rohrstutzens und des plattformseitigen Rohrstutzens;
- Fig. 5: eine Draufsicht auf die Bodeneinheit;

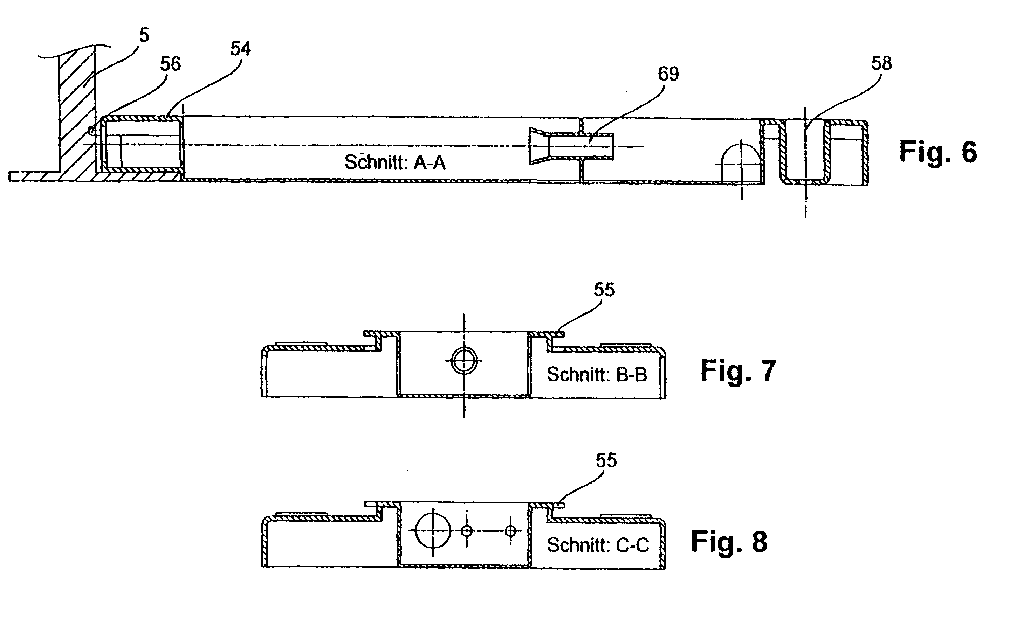

- Fig. 6: eine Längsschnittansicht entlang der Linie A-A in Fig. 5, und
- Fig. 7 und 8: Schnittansichten entlang der Linien B-B bzw. C-C in Fig. 5.

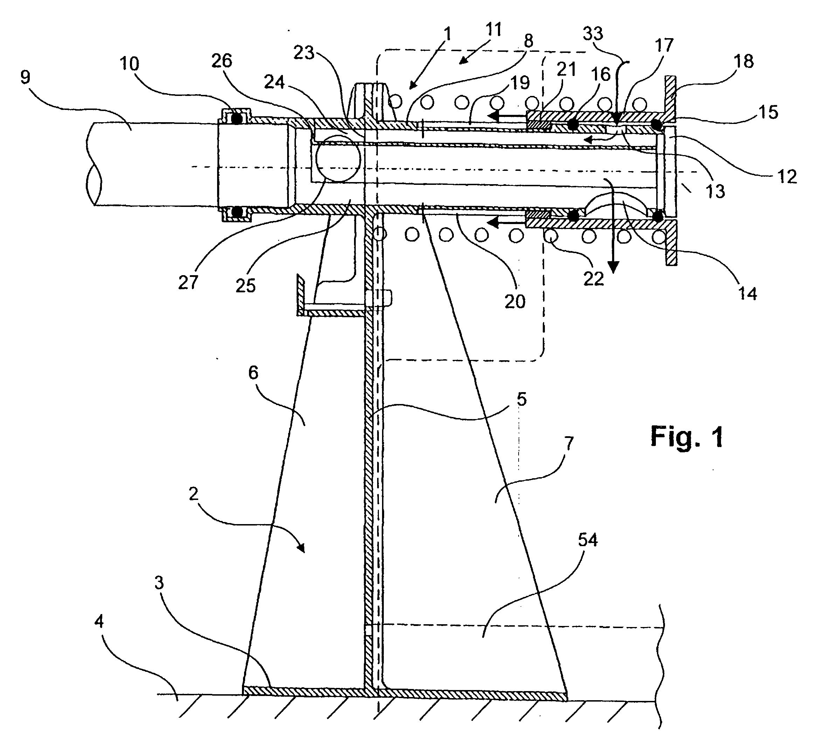

In der Fig. 1 ist das plattformseitige Ankopplungssystem 1 in einem schematischen Längsschnitt dargestellt. Von einer Plattform 2, die mit einem Fußteil 3 am Boden 4 eines Fahrzeugs oder einer stationären Einrichtung festgeschraubt sein kann und eine von seitlichen Wangen 6, 7 abgestützte senkrechte Wand 5 besitzt, wird ein Rohrstutzen 8 gehalten, welcher sich zu beiden Seiten der Wand 5 in bezug auf die Fig. 1 nach links und rechts erstreckt. An dem in der Fig. 1 linken Ende des Rohrstutzens 8 ist die Verbindungsleitung 9 mit Hilfe einer Dichtung 10 dichtend angeschlossen, wobei diese Verbindungsleitung 9 eine Verbindung zum Toilettensystem herstellt und im Bereich der Toilettenschüssel durch eine entsprechende Ventileinrichtung verschlossen ist.

Der in bezug auf die Fig. 1 rechte Teil des Rohrstutzens 8 erstreckt sich in einen mit strichpunktierten Linien schematisch angedeuteten Tank 11, in welchem die von der Toilette kommenden Fäkalien aufgefangen werden sollen, wie später noch im einzelnen beschrieben wird. Wie zu erkennen ist, ist der Tank 11 in seiner Ankopplungsposition bis nahe an die Wand 5 herangeschoben und wird in dieser Position durch entsprechende Arretierungsmittel fixiert, worauf später noch eingegangen wird.

Das stirnseitige rechte Ende des Rohrstutzens 8 ist durch einen Deckel 12 verschlossen.

Im Bereich des freien Endes sind in der Mantelfläche zwei diametral zueinander angeordnete Öffnungen vorgesehen, wobei die obere Öffnung 13 einen wesentlich kleineren Durchmesser als die untere Öffnung 14 aufweist. Rechts und links einer jeweiligen Öffnung sind zwei O-Ringdichtungen 15, 16 vorgesehen, die in entsprechenden Ringnuten in der äußeren Mantelfläche des Rohrstutzens 8 angeordnet sind.

Die Öffnungen 13, 14 sind von einem Verschlußteil 17 verschließbar, welches als zylinderförmiger Schieber mit einem vorderen Flansch 18 ausgebildet ist und auf der Mantelfläche des Rohrstutzens 8 gleitend gelagert ist. Der Schieber nimmt in der Fig. 1, in welcher der Tank 11 nicht an den Rohrstutzen 8 angeschlossen ist, seine Verschlußposition ein, in welcher er mit einem in zwei Nuten 19, 20 in der Mantelfläche des Rohrstutzens 8 geführten Anschlag 21 bis an das rechte Ende der Nut 20 bewegt ist. In dieser Position wird der Schieber 17 mittels einer Schraubenfeder 22 gehalten, die sich mit ihrem linken Ende an der Wand 5 der Plattform 2 und mit ihrem rechten Ende am Flansch 18 des Schiebers abstützt. Um den Schieber 17 in seine Öffnungsstellung nach links zu bewegen, kann auf die rechte Stirnseite des Flansches 18 eine Druckkraft ausgeübt werden, die den Schieber entgegen der Federkraft der Feder 22 nach links verschiebt, bis die Öffnungen 13 und 14 freiliegen. In seiner Bewegung wird der Schieber durch einen oder mehrere Anschläge 21 und die Nuten 19, 20 begrenzt. Die Anschläge 21 können z. B. von einstellbaren Madenschrauben, die in Durchgangsbohrungen der Mantelfläche des Schiebers eingeschraubt sind, gebildet sein. Die Anschläge 21 bewirken nicht nur eine Begrenzung der Schieberbewegung nach links und rechts, sondern verhindern auch eine Rotation des Schiebers um die Rohrachse.

Innerhalb des Rohrstutzens 8 befindet sich eine Trennwand 23, welche sich in Längsrichtung des Rohrstutzens erstreckt und innerhalb des Rohrstutzens 8 zwei voneinander getrennte Kammern 24 und 25 herstellt.

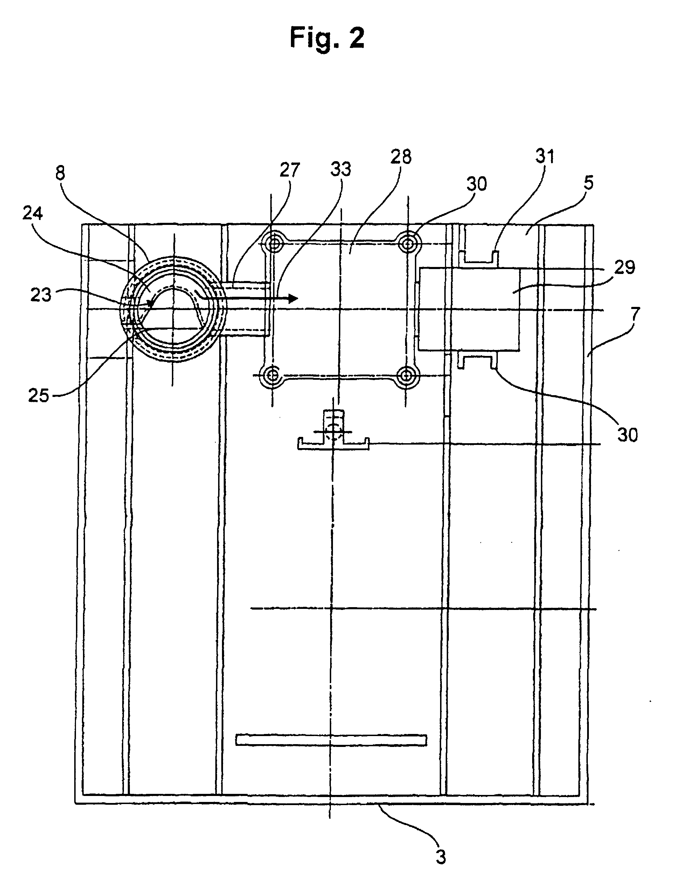

Wie insbesondere aus der Fig. 2 zu erkennen ist, ist die Trennwand 23 bogenförmig ausgebildet und an ihrem zur Verbindungsleitung 9 zeigenden Ende durch eine Stirnwand 26 verschlossen. Auf diese Weise wird eine obere kleinere Ringkammer 24 und eine untere größere Kammer 25 gebildet. Seitlich an die Kammer 24 schließt ein Stutzen 27 an, an welchem eine Vakuumpumpe 28 angeschlossen ist, die von einem Elektromotor 29 antreibbar ist. Die Vakuumpumpe 28 ist in der Fig. 2 nur schematisch dargestellt und wird mittels der Montageeinrichtungen 30 an der Wand 5 gehalten. Für die Halterung des Elektromotors 29 können an der Wand angeformte Profile 31, 32 vorgesehen sein. Die Plattform und der Rohrstutzen 8 können aus einem einstückigen Kunststoffteil im Spritzgußverfahren hergestellt sein.

Bei geöffnetem, d. h. nach links verschobenen Schieber 17, in welcher Stellung die Öffnungen 13 und 14 vollkommen freigegeben sind, wird durch die obere Öffnung 13 und die obere Kammer 24 durch den Stutzen 27 mittels der Vakuumpumpe 28 Luft angesaugt, wobei der Strömungsweg durch die Pfeile 33 dargestellt ist, die in später noch beschriebener Weise in die freie Atmosphäre abgeleitet wird.

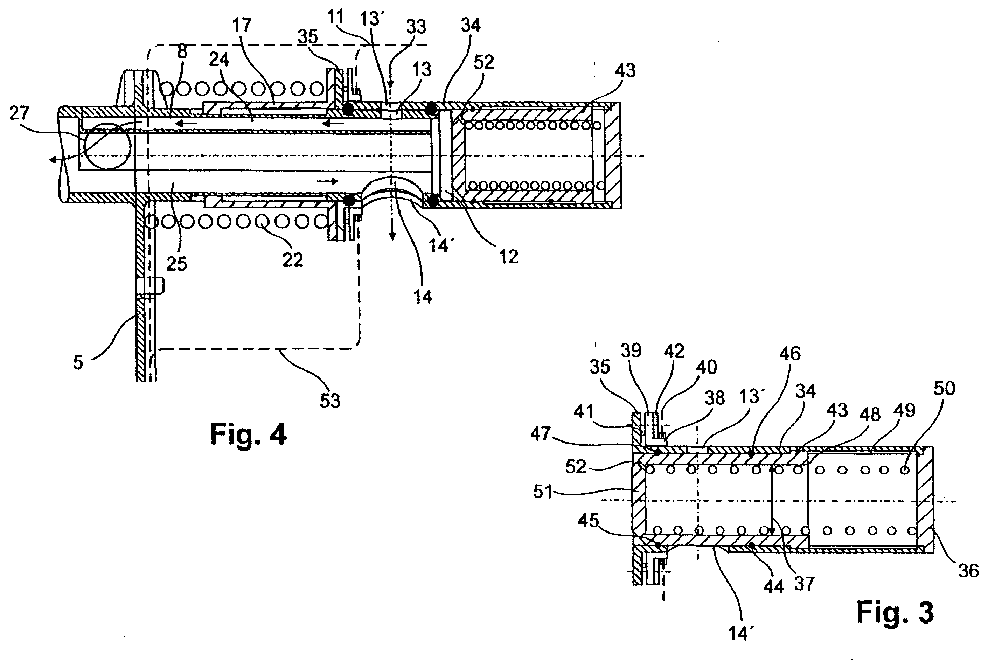

In der Fig. 3 ist ein weiterer Rohrstutzen 34 in einem zur Fig. 1 vergrößertem Maßstab dargestellt, der ebenfalls zylinderförmig ausgebildet ist und an seinem linken Ende einen Flansch 35 besitzt und an seinem rechten stirnseitigen Ende durch einen Deckel 36 verschlossen ist. Der Innendurchmesser 37 des Rohrstutzens 34 entspricht nahezu dem Außendurchmesser des Rohrstutzens 8, so daß der Rohrstutzen 8 in den Rohrstutzen 34 hineingeschoben werden kann und in diesem gleitend aufgenommen werden kann. Dabei sorgen die oben beschriebenen O-Ringdichtungen 15, 16 für eine entsprechende Abdichtung eines zwischen den O-Ringen liegenden Ringraumes.

Der Rohrstutzen 34 besitzt eine obere kleinere Öffnung 13' sowie eine untere größere Öffnung 14', die in ihrem Durchmesser und ihrer Anordnung genau den Öffnungen 13 und 14 entsprechen und beim Einschieben des Rohrstutzens 8 in den Rohrstutzen 34 in Deckung zueinander bringbar sind, wie dies in der Fig. 4 gezeigt ist. Die Einschiebebewegung des Rohrstutzens 8 in den Rohrstutzen 34 kann dabei entweder durch einen sich an der Wand 5 der Plattform 2 befindlichen Anschlag oder eine Einschubbegrenzung bewirkt werden. Auf jeden Fall muß gewährleistet werden, daß in der Ankopplungsposition, die in der Fig. 4 gezeigt ist, die Öffnungen 13, 13' und 14, 14' zueinander fluchten und innerhalb des Tanks 11 angeordnet sind.

Wie aus der Fig. 3 ferner zu erkennen ist, ist der Rohrstutzen 34 in einem Ringflansch 38 aufgenommen, welcher einen stirnseitigen Flanschabschnitt 39 aufweist. Dieser Ringflansch 38 ist in eine entsprechende Öffnung der strichpunktiert angedeuteten Tankwand 40 des Tanks 11 eingesetzt, um eine vergrößerte Aufnahme für den Rohrstutzen 34 zu bieten. Der Flanschabschnitt 39 ist unter Einlagerung einer Dichtung 41 mit Hilfe von Schrauben 42 mit dem Flansch 25 verbunden.

Bei der in der Fig. 3 gezeigten Position ist der Tank z. B. zum Entleeren aus dem Fahrzeug entnommen worden. In dieser Situation werden die Öffnungen 13' und 14' durch einen Schieber 43 verschlossen, dessen Außendurchmesser nahezu dem Innendurchmesser des Rohrstutzens 34 entspricht. In der Mantelfläche des Schiebers sind Ringnuten 44, 45 vorgesehen, in welchen O-Ringdichtungen 46, 47 angeordnet sind. Auf diese Weise sind in der gezeigten Position des Schiebers 43 die Öffnungen 13' und 14' flüssigkeits- und gasdicht verschlossen.

Die nach links gerichtete Verschließbewegung des Schiebers 43 wird durch eine stufenförmige Begrenzungseinrichtung 48 begrenzt, welche in einer entsprechenden Nut 49 bewegbar ist, die sich in Längsrichtung des Rohrstutzens 34 an dessen Innenmantelfläche befindet. Es können diametral gegenüberliegende Nuten vorgesehen sein, die nicht nur die Bewegung des Schiebers 43 in Längsrichtung begrenzen, sondern auch dessen Rotation um seine Längsachse verhindern.

Der Schieber 43 ist als kolbenförmiger Hohlkörper mit einem rechten offenen Ende ausgebildet, in welchem eine Schraubenfeder 50 aufgenommen ist. Die Schraubenfeder stützt sich einerseits am Kolbenboden 51 und andererseits am Deckel 36 ab und hält den Schieber 43 in der Verschlußstellung, so daß in dem Tank aufgenommene Flüssigkeit oder Fäkalien oder dgl. tropfsicher und geruchsdicht aufbewahrt werden. Zum Entleeren des Tanks ist eine gesonderte Öffnung mit einem nicht dargestellten Anschluß vorgesehen, der durch eine geeignete Verschlußeinrichtung verschließbar ist.

Wird nun der Schieber 43 zur Freigabe der Öffnungen 13' und 14' in bezug auf die Fig. 3 entgegen der Federkraft der Feder 50 nach rechts verschoben, dann würde sich die in dem geschlossenen Raum befindliche Luft komprimieren, was vermieden werden soll. Zu diesem Zweck ist in der Bodenfläche 51 eine Entlüftungsbohrung 52 vorgesehen, die über eine geeignete Bohrung in der Mantelfläche des Rohrstutzens 34 in das Tankinnere des Tanks 11 führen kann.

In der Fig. 4 ist die Ankopplungs- oder Andockposition gezeigt, bei welcher der Rohrstutzen 8 in den Rohrstutzen 34 soweit eingeschoben ist, daß die Öffnungen 13, 13' und 14, 14' in Deckung zueinander angeordnet sind. Dabei hat die durch den Deckel 12 verschlossene Stirnseite des Rohrstutzens 8 den Schieber 43 entgegen der Federkraft der Feder 50 in seine rechte Endposition bewegt, während der Flansch 35 des Rohrstutzens 34 den Schieber 17 entgegen der Federkraft der Feder 22 in seine linke Endposition bewegt hat. Der Tank 11 stößt dabei mit seiner vorderen Tankwand 53 gegen einen entsprechenden Anschlag der senkrechten Wand 5 der Plattform 2 an. In der Wand 5 vorgesehene nicht dargestellte Kontakte oder Sensoren registrieren, daß der Tank in seine Ankopplungsposition bewegt ist, und ermöglichen die Betätigung der Vakuumpumpe. Ferner kann ein ebenfalls nicht dargestellter Sensor in der Wand 5 vorgesehen sein, der den Füllungsgrad des Tanks 11 erfaßt, und schließlich ist ein Sensor zur Erfassung des Druckzustandes im Tank vorgesehen. Alle Sensoren stehen mit Schaltern in Wirkverbindung, welche den Energiefluß zum Antriebsmotor der Vakuumpumpe unterbrechen bzw. freigeben, wenn vorbestimmte Sollwerte oder Zustände über- bzw. unterschritten werden bzw. erfaßt werden. Ist z.B. kein Tank eingesetzt, wird die Stromzufuhr zum Antriebsmotor unterbrochen. Ist der Füllungsstand erreicht, wird die Stromzufuhr unterbrochen. Bzw. ist das vorgebene Vakuum erreicht, wir die Vakuumpe abgestellt usw.

Bei der in Fig. 4 dargestellten Ankopplungsposition oder Andockposition des Tanks 11, bei welcher die Öffnungen 13, 13' und 14, 14' zueinander fluchten, kann ein Luftstrom 33 durch die Öffnungen 13, 13', die Luftkammer 24 und den Stutzen 27 mittels der Vakuumpumpe 28 aus dem Tankinneren 11 abgesaugt werden, so daß sich in dem Tank 11 und über die Verbindung der Öffnungen 14, 14' sowie die Fäkalienkammer 25 bis zur Toilette hin ein Vakuum ausbildet. Wird nun die Toilette benutzt und ein entsprechendes Ventil am unteren Ende der Toilettenschüssel geöffnet, dann werden die Fäkalien über die Kammer 25 durch die Öffnungen 14, 14' in den Tank 11 abgesaugt. Das Vakuum ist ausreichend, um den gesamten Fäkalienanfall abzusaugen, so daß nach der Betätigung der Toilette die Kammer 25 vollkommen frei von Fäkalien ist. Der Aufbau eines neuen Vakuums erfolgt durch die Vakuumpumpe intermittierend. Da die Öffnungen 13, 13' und 14, 14' diametral einander gegenüberliegend angeordnet sind, wird in vorteilhafter Weise vermieden, daß Fäkalien aus dem Tank durch die Vakuumpumpe angesaugt werden.

Gemäß einem weiteren vorteilhaften Ausführungsbeispiel kann jedoch auch vorgesehen sein, daß für die Fäkalienleitung und die Luftleitung getrennte Rohrstutzen vorgesehen sind, wobei der Rohrstutzen für den Luftstrom möglichst in einem sehr hoch gelegenen Bereich des Tanks 11 angeordnet ist. Der Tank wäre in einem solchen Fall mit zwei Stutzen ausgestattet, in welche die entsprechenden Stutzen der Plattform 2 beim Ankoppeln des Tanks einführbar wären, um eine Verbindung über korrespondierende Öffnungen zur Vakuumpumpe bzw. zur Toilette herzustellen.

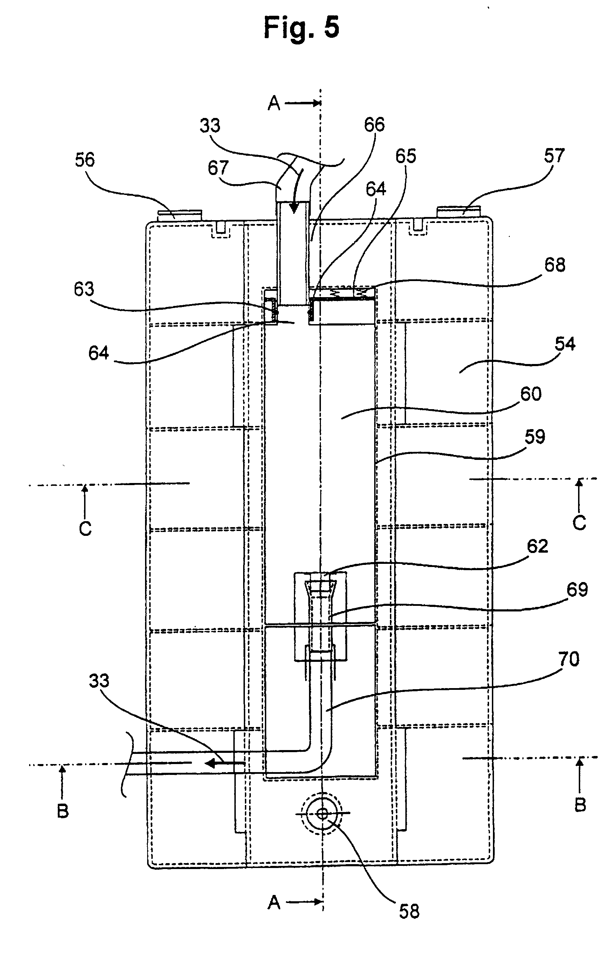

In der in der Fig. 4 gezeigten Kopplungs- oder Andockposition des Tanks 11 muß gewährleistet sein, daß der Tank 11 gegenüber der Plattform 2 eine ortsfeste Position einnimmt. Dies wird mit Hilfe eines in der Fig. 1 schematisch dargestellten Bodenteils 54 erreicht, wie es in der Fig. 5 in Draufsicht gezeigt ist. Das Bodenteil 54 ist von einem gehäuseartigen Rahmen gebildet, der an seiner Oberseite mit Führungseinrichtungen 55 ausgestattet ist. An seiner zur senkrechten Wand 5 der Plattform weisenden Stirnseite sind Zentrierhaken 56, 57 vorgesehen, welche in Aussparungen der Wand 5 einhängbar sind, um das Bodenteil an der Wand 5 zu fixieren.

Der Tank 11 besitzt an seiner Unterseite entsprechende Ausnehmungen und Führungen, die mit der Führungseinrichtung 55 in Eingriff bringbar sind.

Da das Bodenteil 54 aus dem Caravan nach seiner Montage nicht mehr entnommen wird, wird es mittels einer Befestigungseinrichtung 58 an seinem den Zentrierhaken 56, 57 gegenüberliegenden Ende am Boden des Caravans fixiert.

Der Tank kann an seiner von der Wand 5 abgewandten Stirnseite Rastmittel aufweisen, welche in entsprechende Aussparungen des Rahmenteils 54 eingreifen, wenn sich der Tank in seiner Ankopplungsposition befindet. Hierbei kann es sich z. B. um eine verschiebbare Platte handeln, die in vertikaler Richtung am Tank geführt ist und durch Schwerkraft oder durch eine von der Hand ausgeübte Druckkraft nach unten gleitet, um in eine passende Aussparung des Bodenteils 54 unter Reibschluß einzugreifen.

Wie aus der Fig. 5 entnehmbar ist, besitzt das Bodenteil 54 in seinem mittleren Bereich eine Aufnahme 59 oder Vertiefung, in welcher eine Filtereinrichtung 60 einsetzbar ist. Bei der Filtereinrichtung handelt es sich um einen Aktivkohlefilter, der einen Einlaß 61 und einen Auslaß 62 aufweist. Der Einlaß 61 wird unter Verwendung einer O-Ringdichtung 63 in einen Flansch 64 eingesetzt, der an einer Federplatte 65 befestigt ist und in welchen ein Stutzen 66 eingreift. An diesen Stutzen ist die Abluftleitung 67 von der Vakuumpumpe angeschlossen. Zwischen der Federplatte 65 und dem Rand der Aufnahme 59 sind Druckfedern 68 angeordnet, die dafür sorgen, daß die Filtereinrichtung 60 unter einer gewissen Vorspannung in der Aufnahme 59 gehalten wird.

An seinem dem Einlaß 61 in etwa gegenüberliegenden Auslaßende der Filtereinrichtung 60 ist ebenfalls ein Stutzen 69 vorgesehen, der den Auslaß 62 der Filtereinrichtung 60 aufnimmt und seinerseits an einen Schlauch 70 angeschlossen ist, der in die freie Atmosphäre mündet. Wenn der Luftstrom 33 die Filtereinrichtung 60 durchströmt hat, sind Schadstoffe und Geruchsstoffe aus dem Luftstrom entfernt, so daß dieser gereinigt in die freie Atmosphäre austreten kann.

**Bezugszeichenliste**
- 1: plattformseitiges Ankopplungssystem
- 2: Plattform
- 3: Fußteil
- 4: Boden
- 5: senkrechte Wand
- 6, 7: Wange
- 8: Rohrstutzen
- 9: Verbindungsleitung
- 10: Dichtung
- 11: Tank
- 12: Deckel
- 13, 13': obere kleinere Öffnung
- 14, 14': untere größere Öffnung
- 15, 16: O-Ringdichtung
- 17: Verschlußteil, Schieber
- 18: Flansch
- 19, 20: Nut
- 21: Anschlag
- 22: Schraubenfeder
- 23: Trennwand
- 24: Luftkammer
- 25: Fäkalienkammer
- 26: Kammerstirnwand
- 27: Stutzen
- 28: Vakuumpumpe
- 29: Elektromotor
- 30: Montageeinrichtung
- 31, 32: Profile
- 33: Luftstrom
- 34: Rohrstutzen
- 35: Flansch
- 36: Deckel
- 37: Innendurchmesser
- 38: Ringflansch
- 39: Flanschabschnitt
- 40: Tankwand
- 41: Dichtung
- 42: Schrauben
- 43: Schieber
- 44, 45: Ringnut
- 46, 47: O-Ringdichtung
- 48: Begrenzungseinrichtung
- 49: Nut
- 50: Schraubenfeder
- 51: Kolbenboden
- 52: Entlüftungsbohrung
- 53: vordere Tankwand
- 54: Bodenteil
- 55: Führungseinrichtung
- 56, 57: Zentrierhaken
- 58: Befestigungseinrichtung
- 59: Aufnahme
- 60: Filtereinrichtung
- 61: Einlaß
- 62: Auslaß
- 63: O-Ringdichtung
- 64: Flansch
- 65: Federplatte
- 66: Stutzen
- 67: Abluftleitung
- 68: Druckfedern
- 69: Stutzen
- 70: Schlauch

## Patentansprüche

1. Kombiniertes Vakuum-Toilettensystem für eine stationäre oder mobile Einrichtung, insbesondere Wochenendhäuser, Baucontainer, Wohnmobile, Caravans, Boote o. dgl. umfassend einen Tank (11), eine Vakuumtoilette, die eine Vakuumpumpe (28) aufweist, eine Rohrleitung (27) zum Verbinden des Tanks (11) mit der Vakuumpumpe (28), und eine Vorrichtung zum selbsttätigen flüssigkeits- und/oder gasdichten An- bzw. Abkoppeln des Tanks (11) an eine Leitung (9) des Toilettensystems,
**dadurch gekennzeichnet, dass**
ein anzukoppelndes Ende der Leitung (9) und der anzukoppelnde Tank (11) je einen Rohrstutzen (8, 34) der Vorrichtung zum selbsttätigen flüssigkeits- und/oder gas-dichten An- bzw. Abkoppeln aufweisen, von denen einer an seinem stirnseitigen Ende verschlossen ist, während der andere (34) an seinem stirnseitigen Ende durch ein Verschlussteil (43) verschließbar ist, und die Rohrstutzen (8, 34) in eine abgedichtete Position zueinander bewegbar sind,
dass jeder Rohrstutzen (8, 34) in der Kopplungsstellung in Deckung zueinander bringbare Öffnungen (13, 13', 14, 14') aufweist, und der leitungsseitige Rohrstutzen (8) eine sich über den größten Teil seiner Länge erstreckende Trennwand (23) besitzt, welche den Rohrstutzen (8) in zwei gegeneinander verschlossene Kammern (24, 25) unterteilt, wobei die eine Kammer (25) über die Leitung (9) mit der Toilette und die andere Kammer (24) mit der Vakuumpumpe (28) derart verbunden ist, dass eine Verbindung zwischen der Leitung (9) und dem Tank (11) einerseits und eine Verbindung zwischen dem Tank (11) und der Vakuumpumpe (28) andererseits herstellbar ist, und
dass jede Öffnung in der entkoppelten Position durch ein sich beim Entkoppeln in eine Verschlußstellung bewegbares Verschlussteil (17, 43) verschlossen ist.

2. Vakuum-Toilettensystem nach Anspruch 1, **dadurch gekennzeichnet, dass** die Rohrstutzen (8, 34) unter Zwischenlagerung von Dichtungsmitteln (15, 16) ineinander schiebbar sind, bis die Öffnungen (13, 13', 14, 14') innerhalb des Tanks (11) fluchten.

3. Vakuum-Toilettensystem nach Anspruch 1, **dadurch gekennzeichnet, dass** die Öffnungen (13, 13', 14, 14') in der Mantelfläche der Rohrstutzen (8, 34) angeordnet sind.

4. Vakuum-Toilettensystem nach wenigstens einem der vorhergehenden Ansprüche, **dadurch gekennzeichnet, dass** das Kopplungsende der Leitung (9) und der Tank (11) in der Kopplungsposition ortsfest positioniert sind, um das Fluchten der Öffnungen zu gewährleisten.

5. Vakuum-Toilettensystem nach Anspruch 1, **dadurch gekennzeichnet, dass** die Verschlussteile von Schiebern (17, 43) gebildet sind, welche die in der Kopplungsposition fluchtenden Öffnungen (13, 13', 14, 14') freigeben, bzw. in der entkoppelten Position verschließen.

6. Vakuum-Toilettensystem nach Anspruch 5, **dadurch gekennzeichnet, dass** der eine Schieber (17) auf der Außenfläche des einen Rohrstutzens (8) und der andere Schieber (43) auf der Innenfläche des anderen Rohrstutzens (34) gleitend gelagert ist.

7. Vakuum-Toilettensystem nach wenigstens einem der vorhergehenden Ansprüche, **dadurch gekennzeichnet, dass** die Schieber (17, 43) in eine Verschlussstellung für die Öffnungen (13, 13', 14, 14') vorgespannt sind.

8. Vakuum-Toilettensystem nach Anspruch 7, **dadurch gekennzeichnet, dass** für die Vorspannung Schraubenfedern (22, 50) vorgesehen sind.

9. Vakuum-Toilettensystem nach wenigstens einem der vorhergehenden Ansprüche, **dadurch gekennzeichnet, dass** an den Gleitflächen der ineinander schiebbaren Rohrstutzen (8, 34), bzw. der Rohrstutzen und der Schieber (17, 43) Dichtmittel (15, 16, 46, 47) vorgesehen sind.

10. Vakuum-Toilettensystem nach Anspruch 9, **dadurch gekennzeichnet, dass** die Dichtmittel (15, 16, 46, 47) von O-Ringen gebildet sind, die in entsprechenden Ringnuten der Schieber und/oder der Mantelflächen der Rohrstutzen (8, 34) angeordnet sind.

11. Vakuum-Toilettensystem nach wenigstens einem der vorhergehenden Ansprüche, **dadurch gekennzeichnet, dass** die Schieber (17, 43) in ihrer Bewegung in Öffnungs- bzw. in Schließrichtung durch Nut- und Federeinrichtungen (19, 21, 48, 49) geführt und wenigstens in ihrer Bewegung in Schließrichtung begrenzt sind.

12. Vakuum-Toilettensystem nach wenigstens einem der vorhergehenden Ansprüche, **dadurch gekennzeichnet, dass** der Rohrstutzen (8) des Kopplungsendes der Leitung (9) an einer Wand (5) einer Plattform (2) befestigt ist und sich i. w. zu beiden Seiten der Plattform erstreckt, während der tankseitige Rohrstutzen (34) an einer Tankwand (40) angeflanscht ist und sich i. w. in den Tank (11) hinein erstreckt.

13. Vakuum-Toilettensystem nach wenigstens einem der vorhergehenden Ansprüche, **dadurch gekennzeichnet, dass** der plattformseitige Rohrstutzen (8) in den Tankrohrstutzen (34) einschiebbar ist, wobei er den in dem tankseitigen Rohrstutzen (34) gelagerten Schieber (43) mit seinem stirnseitigen verschlossenen Ende in die Öffnungsstellung drückt.

14. Vakuum-Toilettensystem nach wenigstens einem der vorhergehenden Ansprüche, **dadurch gekennzeichnet, dass** der im tankseitigen Rohrstutzen (34) gelagerte Schieber eine Entlüftungsbohrung (52) aufweist.

15. Vakuum-Toilettensystem nach wenigstens einem der vorhergehenden Ansprüche, **dadurch gekennzeichnet, dass** in jedem Rohrstutzen (8, 34) zwei Öffnungen (13, 13', 14, 14') vorgesehen sind, die diametral zueinander angeordnet sind.

16. Vakuum-Toilettensystem nach Anspruch 15, **dadurch gekennzeichnet, dass** eine kleinere Öffnung (13, 13') an der Oberseite und eine größere Öffnung (14, 14') an der Unterseite des jeweiligen Rohrstutzens (8, 34) vorgesehen sind.

17. Vakuum-Toilettensystem nach wenigstens einem der Ansprüche 12-16, **dadurch gekennzeichnet, dass** die Vakuumpumpe (28) an der Wand (5) der Plattform (2) befestigt und von einem Antriebsmotor (29), insbesondere einem Elektromotor angetrieben ist.

18. Vakuum-Toilettensystem nach Anspruch 17, **dadurch gekennzeichnet, dass** die Vakuumpumpe (28) in der Anschlussposition über die eine Kammer (24) und die kleineren Öffnungen (13, 13') und die Toilette über die andere Kammer (25) und die größeren Öffnungen (14, 14') mit dem Tank (11) in Verbindung stehen.

19. Vakuum-Toilettensystem nach wenigstens einem der Ansprüche 1 bis 17, **dadurch gekennzeichnet, dass** die Vakuumpumpe (28) über ein ineinander schiebbares, in der Kopplungsposition gas- und flüssigkeitsdicht abgedichtetes Rohrstutzensystem unmittelbar an einen oberen Bereich des Tanks (11) anschließbar ist, derart, dass in der entkoppelten Stellung des Tanks ein Verschluß des Vakuumanschlusses und des Tankanschlusses gewährleistet ist.

20. Vakuum-Toilettensystem nach wenigstens einem der vorhergehenden Ansprüche, **dadurch gekennzeichnet, dass** ein Sensor zur Tankerkennung eines eingesetzten Tanks (11) vorgesehen ist.

21. Vakuum-Toilettensystem nach Anspruch 20, **dadurch gekennzeichnet, dass** der Sensor zur Tankerkennung ein Schalter ist, der vorzugsweise in der Wand (5) der Plattform (2) derart angeordnet ist, dass er beim Anordnen des Tanks (11) in seine Kopplungsstellung mechanisch schaltbar ist, um den Energiefluss zum Antriebsmotor (29) der Vakuumpumpe (28) freizugeben.

22. Vakuum-Toilettensystem nach wenigstens einem der vorhergehenden Ansprüche 1 bis 19, **dadurch gekennzeichnet, dass** ein Sensor zum Erfassen des Füllungsstandes des Tanks (11) vorgesehen ist.

23. Vakuum-Toilettensystem nach Anspruch 22, **dadurch gekennzeichnet, dass** der Sensor zum Erfassen des Füllungsstandes des Tanks (11), vorzugsweise in der Wand (5) der Plattform (2) im Bereich unterhalb der Öffnung (14') für den Eintritt der Fäkalien in den Tank (11) angeordnet ist.

24. Vakuum-Toilettensystem nach den Ansprüchen 22 und 23, **dadurch gekennzeichnet, dass** der Sensor zum Erfassen des Füllungsstandes des Tanks (11) mit einem Schalter in Wirkverbindung steht, welcher den Energiefluß zum Antriebsmotor (29) der Vakuumpumpe (28) unterbricht, wenn ein zulässiger Füllungsstand des Tanks (11) überschritten wird.

25. Vakuum-Toilettensystem nach wenigstens einem der vorhergehenden Ansprüche 1 bis 19, **dadurch gekennzeichnet, dass** ein Sensor zum Erfassen des in dem Tank (11) herrschenden Unterdrucks vorgesehen ist.

26. Vakuum-Toilettensystem nach Anspruch 25, **dadurch gekennzeichnet, dass** der Sensor zum Erfassen des in dem Tank (11) herrschenden Unterdrucks mit einem Schalter in Wirkverbindung steht, welcher den Antriebsmotor (29) und damit die Vakuumpumpe (28) in Abhängigkeit eines vorgegebenen Schwellwertes für den Unterdruck aktiviert bzw. deaktiviert.

27. Vakuum-Toilettensystem nach wenigstens einem der Ansprüche 12-26, **dadurch gekennzeichnet, dass** die Plattform (2) einen am Boden (4) eines Raumes, insbesondere eines Caravans, befestigbaren verbreiterten Fußteil (3) aufweist, in welchen ein zur Führung und Aufnahme des Tanks dienendes Bodenteil (54) mit Hilfe von Zentrierhaken (56, 57) einsetzbar ist.

28. Vakuum-Toilettensystem nach Anspruch 27, **dadurch gekennzeichnet, dass** das Bodenteil (54) von einem gehäuseartigen Rahmen gebildet ist, der insbesondere an seiner Oberseite mit Führungseinrichtungen (55) ausgestattet ist, die mit korrespondierenden Einrichtungen am Tankboden in Eingriff bringbar sind, um den Tank (11) in der Ankopplungsposition zu halten.

29. Vakuum-Toilettensystem nach wenigstens einem der vorhergehenden Ansprüche, **dadurch gekennzeichnet, dass** an dem Tank (11) und/oder dem Bodenteil (54) Rastmittel vorgesehen sind, mit welchen der Tank (11) in der Ankopplungsposition arretierbar ist.

30. Vakuum-Toilettensystem nach wenigstens einem der vorhergehenden Ansprüche 27 bis 29, **dadurch gekennzeichnet, dass** in dem rahmenartigen Bodenteil (54) eine Aufnahme (59) für eine austauschbare Filtereinrichtung (60) vorgesehen ist.

31. Vakuum-Toilettensystem nach Anspruch 30, **dadurch gekennzeichnet, dass** die Filtereinrichtung (60) mit ihrem Einlaß (61) einerseits an die Abluftseite der Vakuumpumpe (28) und mit ihrem Auslaß (62) andererseits an eine in die freie Atmosphäre mündende Schlauchverbindung (69, 70) angeschlossen ist.

32. Vakuum-Toilettensystem nach wenigstens einem der Ansprüche 30, 31, **dadurch gekennzeichnet, dass** die Filtereinrichtung (60) in der eingesetzten Position federbelastet ist.

33. Vakuum-Toilettensystem nach wenigstens einem der Ansprüche 30-32, **dadurch gekennzeichnet, dass** die Filtereinrichtung (60) von einem Aktivkohlefilter gebildet ist.

34. Vakuum-Toilettensystem nach wenigstens einem der vorhergehenden Ansprüche, **dadurch gekennzeichnet, dass** der Tank (11) mit einem Tragegriff, welcher ein leichtes Hochheben, Versetzen und Tragen des Tanks ermöglicht, ausgestattet ist.

35. Vakuum-Toilettensystem nach wenigstens einem der vorhergehenden Ansprüche, **dadurch gekennzeichnet, dass** der Tank (11) Rollunterstützungselemente aufweist.

36. Caravan, umfassend ein Vakuum-Toilettensystem nach einem der vorhergehenden Ansprüche, **dadurch gekennzeichnet, dass** der Tank (11) derart in dem Caravan angeordnet ist, dass er von der Außenseite des Caravans über eine verschließbare Wandöffnung zugänglich ist.

## Claims

1. Combined vacuum-toilet system for a stationary or mobile apparatus, in particular holiday homes, building site huts, camper vans, caravans, boats, or the like, comprising a tank (11), a vacuum toilet which has a vacuum pump (28), a pipeline (27) for the connection of the tank (11) to the vacuum pump (28), and an apparatus for the automatic fluid-tight and/or gas-tight coupling/uncoupling of the tank (11) to/from a line (9) of the toilet system, **characterised in that**
an end of the line (9) to be coupled and the tank (11) to be coupled each have one pipe connection piece (8, 34) of the apparatus for the automatic fluid-tight and/or gas-tight coupling/uncoupling, one of which is closed at the end face thereof, whereas the other (34) can be closed at the end face thereof by a closure element (43), and the pipe connection pieces (8, 34) are movable relative to one another into a sealed position,
**in that** each pipe connection piece (8, 34) has openings (13, 13', 14, 14') which can be aligned relative to one another in the coupling position, and the pipe connection piece (8) located at the line side has a dividing wall (23) which extends over the majority of the length thereof and which subdivides the pipe connection piece (8) into two chambers (24, 25) which are closed off from one another, the first chamber (25) being connected to the toilet via the line (9) and the second chamber (24) being connected to the vacuum pump (28) in such a manner that a connection between the line (9) and the tank (11), on the one hand, and a connection between the tank (11) and the vacuum pump (28), on the other hand, can be produced, and
**in that** each opening is closed in the uncoupled position by a closure element (17, 43) which is movable into a closure position upon uncoupling.

2. Vacuum-toilet system according to claim 1, **characterised in that** the pipe connection pieces (8, 34) are displaceable into one another, with intermediate arrangement of sealing means (15, 16), until the openings (13, 13', 14, 14') are in alignment within the tank (11).

3. Vacuum-toilet system according to claim 1, **characterised in that** the openings (13, 13', 14, 14') are arranged in the outer face of the pipe connection pieces (8, 34).

4. Vacuum-toilet system according to at least one of the preceding claims, **characterised in that** the coupling end of the line (9) and the tank (11) are positioned in a fixed manner in the coupling position in order to ensure the alignment of the openings.

5. Vacuum-toilet system according to claim 1, **characterised in that** the closure elements are formed by sliders (17, 43) which uncover the openings (13, 13', 14, 14') in alignment in the coupling position or cover the openings (13, 13', 14, 14') in the uncoupled position.

6. Vacuum-toilet system according to claim 5, **characterised in that** one slider (17) is arranged for sliding on the outer face of one pipe connection piece (8) and the other slider (43) is arranged for sliding on the inner face of the other pipe connection piece (34).

7. Vacuum-toilet system according to at least one of the preceding claims, **characterised in that** the sliders (17, 43) are biased into a closure position for the openings (13, 13', 14, 14').

8. Vacuum-toilet system according to claim 7, **characterised in that** helical springs (22, 50) are provided for the biasing.

9. Vacuum-toilet system according to at least one of the preceding claims, **characterised in that** sealing means (15, 16, 46, 47) are provided at the sliding faces of the pipe connection pieces (8, 34), which can be displaced into one another, or of the pipe connection pieces and the sliders (17, 43).

10. Vacuum-toilet system according to claim 9, **characterised in that** the sealing means (15, 16, 46, 47) are formed by 0-rings which are arranged in corresponding annular grooves of the sliders and/or the outer faces of the pipe connection pieces (8, 34).

11. Vacuum-toilet system according to at least one of the preceding claims, **characterised in that** the sliders (17, 43) are guided in their movement in the opening or closing direction by groove and spring devices (19, 21, 48, 49) and are limited at least in their movement in the closing direction.

12. Vacuum-toilet system according to at least one of the preceding claims, **characterised in that** the pipe connection piece (8) of the coupling end of the line (9) is attached to a wall (5) of a platform (2) and extends substantially on both sides of the platform, whereas the pipe connection piece (34) located on the tank side is flanged to a tank wall (40) and extends substantially into the tank (11).

13. Vacuum-toilet system according to at least one of the preceding claims, **characterised in that** the pipe connection piece (8) located on the platform side can be displaced into the pipe connection piece (34) of the tank, pressing the slider (43), arranged in the pipe connection piece (34) located on the tank side, with its front closed end into the opening position.

14. Vacuum-toilet system according to at least one of the preceding claims, **characterised in that** the slider which is arranged in the pipe connection piece (34) located on the tank side has a drilled ventilation hole (52).

15. Vacuum-toilet system according to at least one of the preceding claims, **characterised in that** two openings (13, 13', 14, 14') are provided in each pipe connection piece (8, 34) and are arranged diametrically opposite one another.

16. Vacuum-toilet system according to claim 15, **characterised in that** a smaller opening (13, 13') is provided at the upper side and a larger opening (14, 14') is provided at the lower side of the respective pipe connection piece (8,34).

17. Vacuum-toilet system according to at least one of claims 12 to 16, **characterised in that** the vacuum pump (28) is attached to the wall (5) of the platform (2) and is driven by a drive motor (29), in particular an electric motor.

18. Vacuum-toilet system according to claim 17, **characterised in that** the vacuum pump (28) is connected in the connection position to the tank (11) via the first chamber (24) and the smaller openings (13, 13') and the toilet is connected to the tank (11) via the other chamber (25) and the larger openings (14, 14').

19. Vacuum-toilet system according to at least one of claims 1 to 17, **characterised in that** the vacuum pump (28) can be connected directly to an upper region of the tank (11) via a system of pipe connection pieces, sealed in a gas-tight and fluid-tight manner in the coupling position and able to be displaced into one another, in such a manner that, in the uncoupled position of the tank, closure of the vacuum connection and of the tank connection is ensured.

20. Vacuum-toilet system according to at least one of the preceding claims, **characterised in that** a sensor is provided for the detection of an inserted tank (11).

21. Vacuum-toilet system according to claim 20, **characterised in that** the sensor for tank detection is a switch which is preferably arranged in the wall (5) of the platform (2) in such a manner that it is mechanically switchable when the tank (11) is arranged in its coupling position in order to allow the flow of energy to the drive motor (29) of the vacuum pump (28).

22. Vacuum-toilet system according to at least one of the preceding claims 1 to 19, **characterised in that** a sensor is provided for the detection of the filling level of the tank (11).

23. Vacuum-toilet system according to claim 22, **characterised in that** the sensor for the detection of the filling level of the tank (11) is preferably arranged in the wall (5) of the platform (2) in the region below the opening (14') for the entry of the faeces into the tank (11).

24. Vacuum-toilet system according to claims 22 and 23, **characterised in that** the sensor for the detection of the filling level of the tank (11) is actively connected to a switch which interrupts the flow of energy to the drive motor (29) of the vacuum pump (28) if an admissible filling level of the tank (11) is exceeded.

25. Vacuum-toilet system according to at least one of the preceding claims 1 to 19, **characterised in that** a sensor for the detection of the underpressure which is present in the tank (11) is provided.

26. Vacuum-toilet system according to claim 25, **characterised in that** the sensor for the detection of the underpressure present in the tank (11) is actively connected to a switch which activates and deactivates the drive motor (29) and, consequently, the vacuum pump (28) dependent on a predetermined threshold value for the underpressure.

27. Vacuum-toilet system according to at least one of claims 12 to 26, **characterised in that** the platform (2) has a widened foot member (3) which can be attached to the floor (4) of a room, in particular of a caravan, and into which a floor member (54) which is used for guiding and receiving the tank can be inserted by means of centring hooks (56, 57).

28. Vacuum-toilet system according to claim 27, **characterised in that** the floor member (54) is formed by a housing-like frame which, in particular on its upper side, is fitted with guide devices (55) which can be engaged with corresponding devices on the base of the tank in order to hold the tank (11) in the coupling position.

29. Vacuum-toilet system according to at least one of the preceding claims, **characterised in that** there are provided at the tank (11) and/or the floor member (54) latching means, with which the tank (11) can be retained in the coupling position.

30. Vacuum-toilet system according to at least one of the preceding claims 27 to 29, **characterised in that** a receiving element (59) for an exchangeable filter device (60) is provided in the frame-like floor member (54).

31. Vacuum-toilet system according to claim 30, **characterised in that** the filter device (60) is connected with its inlet (61), on the one hand, to the discharge side of the vacuum pump (28) and with its outlet (62), on the other hand, to a hose connection (69, 70) which opens out into the free atmosphere.

32. Vacuum-toilet system according to at least one of claims 30 and 31, **characterised in that** the filter device (60) is spring-biased in the inserted position.

33. Vacuum-toilet system according to at least one of claims 30 to 32, **characterised in that** the filter device (60) is formed by an active carbon filter.

34. Vacuum-toilet system according to at least one of the preceding claims, **characterised in that** the tank (11) is provided with a carry handle which allows easy lifting, moving and carrying of the tank.

35. Vacuum-toilet system according to at least one of the preceding claims, **characterised in that** the tank (11) has rolling support elements.

36. Caravan comprising a vacuum-toilet system according to any one of the preceding claims, **characterised in that** the tank (11) is so arranged in the caravan that it is accessible from the outside of the caravan via a closable wall opening.

## Revendications

1. Système combiné d'un système de toilettes à vide pour une installation fixe ou mobile, en particulier pour des maisons de week-end, des baraques de chantier, des maisons mobiles, des caravanes, des bateaux ou similaires, comprenant une cuve (11), des toilettes à vide qui présentent une pompe à dépression (28), une conduite tubulaire (27) pour relier la cuve (11) à la pompe à dépression (28) et un dispositif pour accoupler et désaccoupler automatiquement et de manière étanche aux liquides et/ou au gaz la cuve (11) à une conduite (9) du système de toilettes,
**caractérisé en ce que**
une extrémité d'accouplement de la conduite (9) et de la cuve (11) à accoupler présentent chacune une tubulure (8, 34) du dispositif pour accoupler et désaccoupler automatiquement et de manière étanche aux liquides et/ou au gaz, dont l'une est fermée sur sa face frontale alors que l'autre (34) peut être fermée à son extrémité frontale par un élément d'obturation (43), et les tubulures (8, 34) peuvent être déplacées l'une par rapport à l'autre dans une position d'étanchéité,
**en ce que** chaque tubulure (8, 34) présente des ouvertures (13, 13', 14, 14') qui peuvent être amenées en recouvrement dans la position d'accouplement et la tubulure (8) côté conduite possède une paroi de séparation (23) qui s'étend sur la majeure partie de la longueur de celle-ci, laquelle paroi subdivise la tubulure (8) en deux chambres (24, 25) fermées l'une par rapport à l'autre, l'une des chambres (25) étant reliée aux toilettes par la conduite de raccordement (9) et l'autre chambre (24) étant reliée à la pompe à dépression (28) de telle sorte que d'une part, le raccordement entre la conduite (9) et la cuve (11) et d'autre part, le raccordement entre la cuve (11) et la pompe à dépression (28) peuvent être réalisés, et
**en ce que** chaque ouverture, dans la position de désaccouplement, est fermée par un élément d'obturation (17, 43) pouvant être déplacé dans une position d'obturation lors du désaccouplement.

2. Système de toilettes à vide selon la revendication 1, **caractérisé en ce que** les tubulures (8, 34), entre lesquelles sont intercalées des moyens d'étanchéité (15, 16), peuvent coulisser l'une dans l'autre jusqu'à ce que les ouvertures (13, 13', 14, 14') soient alignées à l'intérieur de la cuve (11).

3. Système de toilettes à vide selon la revendication 1, **caractérisé en ce que** les ouvertures (13, 13', 14, 14') sont disposées sur la surface d'enveloppe des tubulures (8, 34).

4. Système de toilettes à vide selon au moins une des revendications précédentes, **caractérisé en ce que** l'extrémité d'accouplement de la conduite (9) et la cuve (11) sont positionnées de manière stationnaire dans la position d'accouplement pour garantir l'alignement des ouvertures.

5. Système de toilettes à vide selon la revendication 1, **caractérisé en ce que** les éléments d'obturation sont formés par des pièces coulissantes (17, 43) qui dégagent les ouvertures (13, 13', 14, 14') alignées dans la position d'accouplement et les obturent dans la position de désaccouplement.

6. Système de toilettes à vide selon la revendication 5, **caractérisé en ce que** l'une des pièces coulissantes (17) est montée coulissante sur la surface extérieure de l'une des tubulures (8) et l'autre pièce coulissante (43) est montée coulissante sur la surface intérieure de l'autre tubulure (34).

7. Système de toilettes à vide selon au moins une des revendications précédentes, **caractérisé en ce que** les pièces coulissantes (17, 43) sont précontraintes dans une position d'obturation pour les ouvertures (13, 13', 14, 14').

8. Système de toilettes à vide selon la revendication 7, **caractérisé en ce que** des ressorts à boudin (22, 50) sont prévus pour la précontrainte.

9. Système de toilettes à vide selon au moins une des revendications précédentes, **caractérisé en ce que** des moyens d'étanchéité (15, 16, 46, 47) sont prévus sur les surfaces de glissement des tubulures (8, 34) pouvant coulisser l'une dans l'autre, ou des tubulures et des pièces coulissantes (17, 43).

10. Système de toilettes à vide selon la revendication 9, **caractérisé en ce que** les moyens d'étanchéité (15, 16, 46, 47) sont formés par des joints toriques qui sont disposés dans des gorges annulaires appropriées des pièces coulissantes et/ou des surfaces d'enveloppe des tubulures (8, 34).

11. Système de toilettes à vide selon au moins une des revendications précédentes, **caractérisé en ce que** les pièces coulissantes (17, 43) sont guidées dans leur déplacement dans la direction d'ouverture et dans la direction de fermeture par des dispositifs à rainure et ressort (19, 21, 48, 49) et sont limitées au moins dans leur déplacement dans la direction de fermeture.

12. Système de toilettes à vide selon au moins une des revendications précédentes, **caractérisé en ce que** la tubulure (8) de l'extrémité d'accouplement de la conduite (9) est fixée sur une paroi (5) d'une plate-forme (2) et s'étend sensiblement des deux côtés de la plate-forme tandis que la tubulure (34) côté cuve est raccordée par brides à une paroi de cuve (40) et s'étend sensiblement à l'intérieur de la cuve (11).

13. Système de toilettes à vide selon au moins une des revendications précédentes, **caractérisé en ce que** la tubulure (8) côté plate-forme peut coulisser dans la tubulure de cuve (34), ladite tubulure poussant, avec son extrémité frontale fermée, la pièce coulissante (43) montée dans la tubulure (34) côté cuve, dans la position d'ouverture.

14. Système de toilettes à vide selon au moins une des revendications précédentes, **caractérisé en ce que** la pièce coulissante montée dans la tubulure (34) côté cuve présente un trou d'aération (52).

15. Système de toilettes à vide selon au moins une des revendications précédentes, **caractérisé en ce que** deux ouvertures (13, 13', 14, 14') disposées de façon diamétralement opposée l'une par rapport à l'autre sont prévues dans chaque tubulure (8, 34).

16. Système de toilettes à vide selon la revendication 15, **caractérisé en ce qu'**une ouverture plus petite (13, 13') est prévue sur le côté supérieur et une ouverture plus grande (14, 14') est prévue sur le côté inférieur de chaque tubulure (8, 34).

17. Système de toilettes à vide selon au moins une des revendications 12 à 16, **caractérisé en ce que** la pompe à dépression (28) est fixée sur la paroi (5) de la plate-forme (2) et est entraînée par un moteur d'entraînement (29), en particulier par un moteur électrique.

18. Système de toilettes à vide selon la revendication 17, **caractérisé en ce que** la pompe à dépression (28), dans la position de raccordement, est reliée à la cuve (11) par l'une des chambres (24) et les ouvertures (13, 13') plus petites et les toilettes par l'autre chambre (25) et les ouvertures (14, 14') plus grandes.

19. Système de toilettes à vide selon au moins une des revendications 1 à 17, **caractérisé en ce que** la pompe à dépression (28) peut être raccordée directement à une zone supérieure de la cuve (11) par un système de tubulures pouvant coulisser les unes à l'intérieur des autres et étanches au gaz et aux liquides dans la position d'accouplement, de telle manière que dans la position de désaccouplement de la cuve, une fermeture du raccord à dépression et du raccord de cuve soit garantie.

20. Système de toilettes à vide selon au moins une des revendications précédentes, **caractérisé en ce qu'**il est prévu un capteur destiné à détecter qu'une cuve (11) est insérée.

21. Système de toilettes à vide selon la revendication 20, **caractérisé en ce que** le capteur de détection de cuve est un commutateur qui est disposé de préférence dans la paroi (5) de la plate-forme (2) de telle manière qu'il puisse être commuté mécaniquement lors de la mise en place de la cuve (11) dans sa position d'accouplement afin de laisser passer le flux d'énergie vers le moteur d'entraînement (29) de la pompe à dépression (28).

22. Système de toilettes à vide selon au moins une des revendications précédentes 1 à 19, **caractérisé en ce qu'**il est prévu un capteur pour détecter le niveau de remplissage de la cuve (11).

23. Système de toilettes à vide selon la revendication 22, **caractérisé en ce que** le capteur de détection du niveau de remplissage de la cuve (11) est disposé de préférence dans la paroi (5) de la plate-forme (2), dans la région située sous l'ouverture (14') pour l'entrée des matières fécales dans la cuve (11).

24. Système de toilettes à vide selon les revendications 22 et 23, **caractérisé en ce que** le capteur de détection du niveau de remplissage de la cuve (11) coopère avec un commutateur qui interrompt le flux d'énergie vers le moteur d'entraînement (29) de la pompe à dépression (28) lorsqu'un niveau de remplissage admissible de la cuve (11) est dépassé.

25. Système de toilettes à vide selon au moins une des revendications précédentes 1 à 19, **caractérisé en ce qu'**il est prévu un capteur pour détecter la dépression régnant dans la cuve (11).

26. Système de toilettes à vide selon la revendication 25, **caractérisé en ce que** le capteur de détection de la dépression régnant dans la cuve (11) coopère avec un commutateur qui active ou désactive le moteur d'entraînement (29) et ainsi la pompe à dépression (28) en fonction d'un seuil de dépression prédéterminé.

27. Système de toilettes à vide selon au moins une des revendications 12 à 26, **caractérisé en ce que** la plate-forme (2) présente un élément formant pied (3) élargi qui peut être fixé sur le sol (4) d'une pièce, en particulier d'une caravane, et dans lequel peut être inséré à l'aide de crochets de centrage (56, 57) un élément de fond (54) servant au guidage et à la réception de la cuve.

28. Système de toilettes à vide selon la revendication 27, **caractérisé en ce que** l'élément de fond (54) est formé d'un cadre semblable à un boîtier qui est équipé, en particulier sur son côté supérieur, de dispositifs de guidage (55) qui peuvent être amenés en prise avec des dispositifs correspondants sur le fond de cuve afin de maintenir la cuve (11) dans la position d'accouplement.

29. Système de toilettes à vide selon au moins une des revendications précédentes, **caractérisé en ce qu'**il est prévu sur la cuve (11) et/ou sur l'élément de fond (54), des moyens d'arrêt avec lesquels la cuve (11) peut être bloquée dans la position d'accouplement.

30. Système de toilettes à vide selon au moins une des revendications précédentes 27 à 29, **caractérisé en ce que** dans l'élément de fond (54) en forme de cadre, il est prévu un logement (59) pour un dispositif de filtrage (60) remplaçable.

31. Système de toilettes à vide selon la revendication 30, **caractérisé en ce que** le dispositif de filtrage (60) est raccordé par son entrée (61) d'une part au côté d'évacuation d'air de la pompe à dépression (28) et avec sa sortie (62) d'autre part à un tuyau de raccordement (69, 70) débouchant dans l'atmosphère.

32. Système de toilettes à vide selon au moins une des revendications 30 et 31, **caractérisé en ce que** le dispositif de filtrage (60) est sollicité par ressort lorsqu'il est dans la position d'insertion.

33. Système de toilettes à vide selon au moins une des revendications 30 à 32, **caractérisé en ce que** le dispositif de filtrage (60) est formé par un filtre au charbon actif.

34. Système de toilettes à vide selon au moins une des revendications précédentes, **caractérisé en ce que** la cuve (11) est équipée d'une poignée de transport qui permet facilement de soulever, déplacer et porter la cuve.

35. Système de toilettes à vide selon au moins une des revendications précédentes, **caractérisé en ce que** la cuve (11) présente des éléments facilitant le roulement.

36. Caravane comprenant un système de toilettes à vide selon l'une quelconque des revendications précédentes, **caractérisée en ce que** la cuve (11) est disposée dans la caravane de telle sorte qu'elle est accessible par le côté extérieur de la caravane par une ouverture dans la paroi qui peut être fermée.
